**Europäisches Patentamt**

**European Patent Office**

**Office européen des brevets**

(19)

(11) Veröffentlichungsnummer : **0 110 119 B2**

(12)

# NEUE EUROPÄISCHE PATENTSCHRIFT

(45) Veröffentlichungstag der neuen Patentschrift :
**15.01.92 Patentblatt 92/03**

(51) Int. Cl.$^5$ : **B60T 17/22**

(21) Anmeldenummer : **83110623.2**

(22) Anmeldetag : **25.10.83**

(54) **Mehrkreis-Druckmittel-Bremsanlage.**

(30) Priorität : **30.10.82 DE 3240273**
**18.10.83 DE 3337800**

(43) Veröffentlichungstag der Anmeldung :
**13.06.84 Patentblatt 84/24**

(45) Bekanntmachung des Hinweises auf die
Patenterteilung :
**28.01.87 Patentblatt 87/05**

(45) Bekanntmachung des Hinweises auf die
Entscheidung über den Einspruch :
**15.01.92 Patentblatt 92/03**

(84) Benannte Vertragsstaaten :
**DE FR GB SE**

(56) Entgegenhaltungen :
**DE-A- 2 043 840**
**DE-A- 2 726 465**
**DE-A- 2 726 640**

(73) Patentinhaber : **ROBERT BOSCH GMBH**
**Postfach 50**
**W-7000 Stuttgart 1 (DE)**

(72) Erfinder : **Müller, Egbert, Dr.-Ing.**
**Schillerstrasse 12**
**W-7147 Hochdorf (DE)**

EP 0 110 119 B2

## Beschreibung

Die Erfindung geht aus von einer Mehrkreis-Bremsanlage nach der Gattung des Hauptanspruchs. Eine derartige Bremsanlage ist bekannt (EP-A-0 082 916, veröffentlicht am 06.07.83).

Bei dieser bekannten Bremsanlage werden die elektrischen Signale erst nach einem gewissen Druckanstieg im Bremssystem erzeugt. Dadurch entsteht ein in vielen Fällen untragbarer Zeitverlust.

Der Erfindung liegt die Aufgabe zugrunde, diesen Nachteil zu vermeiden und eine Bremsanlage zu schaffen, die bei höherer Verlässlichkeit schneller arbeitet.

Diese Aufgabe wird gemäss der Erfindung bei einer gattungsgemässen Bremsanlage durch die kennzeichnenden Merkmalen des Patentanspruchs 1 gelöst.

Eine solche Bremsanlage hat zunächst den Vorteil, dass bei Ausfall eines Steuerkreises oder einer Art von verfügbaren Bremssignalen (elektrisch oder pneumatisch) der oder die anderen intakten Steuerkreise und Bremssignale das der Bremsanlage zugeordnete mindestens eine Ventil ( Drucksteuerventil) noch voll wirksam steuern können. Auf diese Weise erhöht sich die Sicherheit der Bremsanlage entscheidend. Vorteilhaft ist ferner, dass die Ansteuerung des oder der Ventile und/oder der Ventilkombination bzw. der Drucksteuerventile sowohl mit einem elektrischen als auch mit einem Druckmittelsignal von der Betriebsbremseinrichtung erfolgt, wobei üblicherweise das pneumatische Signal zurückgehalten und der elektrische Kreis zum Bremszylinder durchgeschaltet wird. Bei einer Bremsung wird das pneumatische Signal auf Verfügbarkeit überprüft, und zwar unmittelbar angrenzend zum Punkt des Absperrens dieses pneumatischen Signals, im Falle, dass der elektrische Kreis zum Bremszylinder, wie primär vorgesehen, durchgeschaltet ist. Bei Ausbleiben des elektrischen Signals gelangt der pneumatisch gesteuerte Kreis zum Bremszylinder. Die Bremsanlage ist dabei so ausgeführt, dass das pneumatische Signal in keinem Fall das elektrische Signal überspielen kann; andererseits ist die Ruhestellung der jeweils beteiligten Ventile oder Ventilkombinationen so ausgebildet, dass diese, üblicherweise unter Federdruckvorspannung, in einer solchen Position an ihren jeweiligen Sitzen anliegen, dass bei Ausbleiben der elektrischen Signale eine durchgehende pneumatische Verbindung von der Betriebsbremseinrichtung zu den Bremszylindern geschaltet ist.

Durch die in den Unteransprüchen aufgeführten Massnahmen sind vorteilhafte Weiterbildungen und Verbesserungen der im Hauptanspruch angegebenen Bremsanlage möglich.

In einer Variante ist es möglich, dem den Bremszylindern unmittelbar vorgeschalteten Stellventil den Vorratsdruck des Druckmittels unmittelbar zuzuführen mit einer Knotenbildung zwischen dem oder den Bremszylindern und dem jeweiligen Stellventil, an welchen Knoten eine pneumatische Druckleitung vom von der Betriebsbremseinrichtung mehrkreisig (pneumatisch, elektrisch) angesteuerten Eingangsventil angeschlossen ist.

Es ist ferner möglich, die gesamte Ventilkombination einheitlich in einem Block als mehrkreisig ansteuerbares Drucksteuerventil mit Relaisventil auszubilden, wobeineben dem Relaisventil und dieses ansteuernd Vorsteuermagnetventile vorgesehen sind, die auch der Realisierung von Haltefunktionen dienen können. Alle Vorsteuerventilsitze und Durchgänge sind so ausgebildet, dass bei mangelhaftem Zustand ein merkbares Signal erzeugt und so eine Fehlererkennung möglich ist. Im letzteren Ausbildungsfall eines Drucksteuerventils mit Relaisventil sind sowohl die Umschaltmittel zur Aufleitung des durch elektrische oder pneumatische Signalgebung bewirkten Steuerdrucks auf das Relaisventil als Magnetventil als auch das den Vorratsdruck zum Relaisventil steuernde Vorsteuerventil als Magnetventil ausgebildet. Letzteres Vorsteuerventil ist dabei dem Umschalt- Magnetventil vorgeschaltet, jedoch im stromlosen Zustand durch die Einwirkung der Vorspannungsfeder so positioniert, dass der Vorratsdruck zu allen Ventilsteuersitzen und Durchgängen im elektrisch nicht angesteuertem also stromlosen Zustand der Magnetventile gelangen kann.

Ausführungsbeispiele der Erfindung sind in der Zeichnung dargestellt und werden in der nachfolgenden Beschreibung näher erläutert. Die Figuren 1 und 2 zeigen in schematisierter Darstellung einen mehrfach ansteuerbaren Bremskreis mit Kontrolle der anstehenden Signale in verschiedenen Varianten, jeweils mit von der Betriebsbremseinrichtung unmittelbar mehrkreisig beaufschlagten Eingangsventil und dem oder den Bremszylindern unmittelbar vorgeschalteten Stell- oder Regelventil, während die Figur 3 im Querschnitt ein Drucksteuerventil mit einem aktiven Umschaltelement in Form eines Magnetventils zeigt, ergänzt durch ein dem Relaisventil nachgeschaltetes Hauptventil mit eigenem Vorsteuerventil zur Aufnahme einer einkanaligen ABS-Steuerfunktion.

## Beschreibung der Ausführungsbeispiele

Der Grundgedanke vorliegender Erfindung besteht darin, einen mehrfach ansteuerbaren Bremskreis so auszubilden, dass einerseits die Sicherheit entscheidend erhöht, gleichzeitig die Verfügbarkeit der Bremssignale mit Sensoren überwacht, also eine Kontrolle des Steuerungsablaufs vorgenommen wird und andererseits

2

bei Ausfall sinnvolle Ersatzfunktionen automatisch vorgenommen und eine Anzeige des Fehlers ausgelöst wird. Dabei ist die Grundauslegung der Bremsanlage mit ihren Ventilen oder Ventilkombinationen so getroffen, dass das pneumatische, von der Betriebsbremseinrichtung erzeugte Bremssignal zurückgehalten und primär der elektrische Kreis zu dem oder den Bremszylindern durchgeschaltet wird.

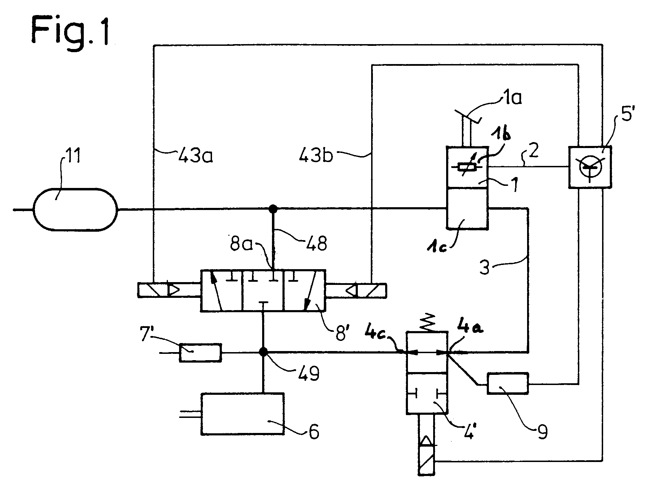

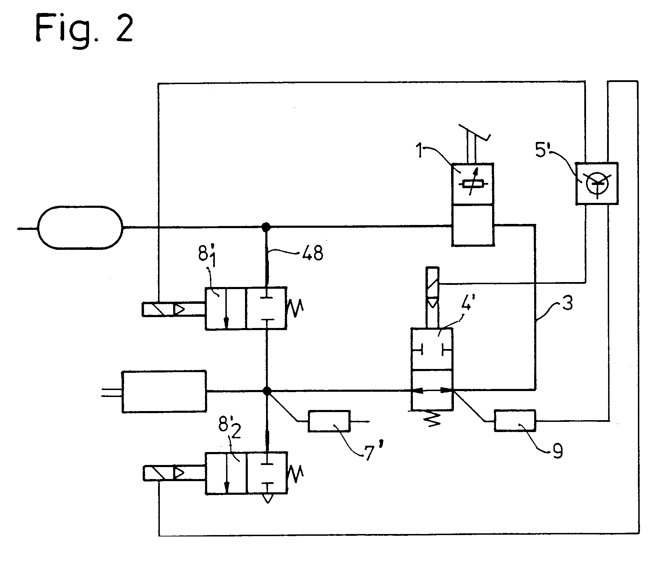

In den Fig. 1 und 2 sind gleiche Komponenten und Gegenstände, die gleiche Funktionen erfüllen, mit gleichen Bezugszeichen versehen, bei nur geringfügigen Änderungen von Funktion und Ausbildung jeweils mit einem oder mehreren Anführungsstrichen oben.

Die Betriebsbremseinrichtung, die beispielsweise vom Bremspedal 1a durch den Fahrer oder Führer des mit der erfindungsgemässen Bremsanlage ausgestatteten Fahrzeugs betätigt wird, ist mit 1 bezeichnet. Bei Betätigung steuert die Betriebsbremseinrichtung 1 sowohl ein elektrisches Bremssignal aus, dessen Erzeugung durch das bei 1b angegebene Potentiometer angedeutet ist, als auch ein pneumatisches Bremssignal, erzeugt von einem Bremsdruckgeber 1c. Beide Bremssignale, das elektrische als auch das pneumatische, werden gleichzeitig erzeugt. Demnach ergibt sich an einer, zu einer elektrischen oder elektronischen Schalteinrichtung, einer elektrischen Logikschaltung, einem Mikrorechner, einem Prozessor oder einem ähnlichen elektrischen Bearbeitungsteil 5' geführten elektrischen Steuerleitung das elektrische Bremssignal und wird dort weiterverarbeitet; das pneumatische Bremssignal gelangt über die Druckleitung 3 zu einem Eingangsventil 4', welches ein sogeanntes 2/2-Wegeventil ist. Das Eingangsventil 4 kann ein einfaches Umschaltventil sein; es kann aber auch als Proportionalventil ausgebildet sein. Der pneumatische Steuerdruck der Betriebsbremseinrichtung 1 steht daher grundsätzlich an dem einen Eingang 4a des Eingangsventils 4' an.

Nach Weiterverarbeitung und gegebenenfalls Verstärkung des elektrischen Bremssignals wird dieses über eine erste Ausgangsleitung dem elektrischen Ansteuerteil des Eingangsventils 4 zugeführt, welches zusammen mit der angedeuteten Vorsteuerfunktion auch ein vorgesteuertes 3/2-Wege-Magnetventil sein kann.

Über weitere Ausgangsleitungen 43a, 43b ist das elektrische Bremssignal des elektrisch gesteuerten Kreises zu den elektrischen Ansteuerteilen eines bezüglich des pneumatisch gesteuerten Kreise dem Eingangsventil 4' nachgeschalteten Stell- oder Regelventil 8' geführt.

Auch das Stellventil 8', wie es im folgenden bezeichnet werden soll, ist vorzugsweise als vorgesteuertes Ventil zur Erzielung einer gegebenen Verstärkung ausgebildet.

Der eine Ausgang 4c des Eingangsventils 4' ist mit dem Druckeingang/-ausgang 8a des nachgeschalteten Stellventils 8' verbunden.

Der Aufnau der Bremsanlage entsprechend Fig. 1 vervollständigt sich durch mindestens einen druckempfindlichen Sensor 9 am Eingang 4a des Eingansventils 4' und einen weiteren Drucksensor 7', der mit der vom Ausgang des Stellventils 8' zu dem oder den Bremszylindern 6 führenden Druckleitung verbunden ist.

Die Sensoren 9 und 7' können den pneumatischen Druck als stetigen Messwert erfassen, oder auch nur über Schalter einen Mindestdruck signalisieren. Bei Erfassung des pneumatischen Drucks als stetigen Messwert kann von der elektrischen Steuerschaltung 5', wie sie im folgenden ausschliesslich bezeichnet wird, auch ein Vergleich der erfassten Druckwerte mit dem bei Betätigung der Betriebsbremseinrichtung 1 erzeugten elektrischen Bremssignal nach Grösse und Zeit vorgenommen und gegebenenfalls eine entsprechende Nachregelung (Nachstellung) des Eingangsventils 4' und/oder des Stellventils 8' vorgenommen werden.

Es ergibt sich dann folgende Funktion. In der gezeichneten Stellung sind die vorhandenen Ventile stromlos und der Vorratsdruck steht immer mindestens bis zum unschaltenden Eingangsventil 4' oder zum Stellventil 8' an.

Bei Aussteuerung des elektrischen sowie pneumatischen Bremssignals durch die Betriebsbremseinrichtung 1 wird das Eingangsventil 4' durch die elektrische Bremssignalzuführung aus der gezeichneten Position umgeschaltet und stellt so die Verbindung vom Vorratsdruckbehälter 11 über die Vorratsleitung zu den Bremszylindern 6 her. Dabei wird am Sensor 7' der eingesteuerte Druck erfasst und bei Bedarf durch das Stellventil 8' auf den gewünschten Sollwert eingeregelt. Gleichzeitig wird auch am Eingangsventil 4' mit dem Drucksensor 9 die Verfügbarkeit des pneumatischen Bremsdrucksignals festgestellt.

Die erwähnte Einregelung auf den Sollwert unter Verwendung des Ausgangssignals des Sensor 7' als Istwert kann durch diese Umschaltungen realisiert werden; alternativ ist eine Ausgestaltung des Stellventils 8' als Proportionalventil ebenfalls denkbar.

Es können sich folgende Fehlerfälle ergeben:

Der Drucksensor 7' meldet Druck, der Drucksensor 9 meldet Druckwert Null; in diesem Fall wird von der Steuerschaltung 5' eine Anzeige als Fahrerinformation optisch und/oder akustisch in geeigneter Weise ausgelöst. Eine solche Fehleranzeige bedeutet, dass die Betriebsbremseinrichtung auf den Eingang 4a den Vorratsdruck vom Behälter 11 nicht durchschaltet, die elektrische oder elektronische Steuerung arbeitet einwandfrei und der Vorratsdruck gelangt unmittelbar vom Behälter 11 über das Stellventil 8' zum Bremszylin-

3

der 6.

Im umgekehrten Fall - Sensor 7 meldet Druck Null - Sensor 9 meldet Druck, wird auf die elektronische Steuerung verzichtet; die logische Steuerschaltung 5 nimmt in diesem Fall von ihren sämtlichen Eingängen eventuelle Steuersignale weg und der Bremsdruck wird pneumatisch durchgeschaltet. Die Einregelung auf den gewünschten Sollwert erfolgt dann unmittelbar über die Betriebsbremseinrichtung 1. Auch in diesem Fall ist eine entsprechende Fahrerinformation durch Signalgabe möglich.

Beim Ausführungsbeispiel der Fig. 1 sind Eingangsventil 4' und Stellventil 8 auch im pneumatischen Kreis auf die Bremszylinder 6 parallelgeschaltet; daher liegt der Druck vom Vorratsbehälter 11 über eine Zweigleitung 48 direkt am Eingang 8a' des Stellventils 8' an und im normalen Betriebsbremsfall erfolgt die Einregelung des Drucks auf den gewünschten, elektrisch von der Betriebsbremseinrichtung 1 vorgegebenen Sollwert durch entsprechende Ansteuerung des Stellventils 8' bei Abfrage des Istwerts über den Drucksensor 7'. Fällt die elektronische Steuerung aus, dann läuft die pneumatische Druckbetätigung über das nicht umgeschaltete Eingangsventil 4' (wie in der Zeichnung dargestellt) zum Druckleitungsknoten 49 unmittelbar vor den Bremszylindern 6.

Die Variante der Figur 2 unterscheidet sich von dem Ausführungsbeispiel der Figur 1 dann noch lediglich dadurch, dass das Stellventil 8' in zwei Teilstellventile $8_1'$ sowie $8_2'$ unterteilt ist, die jeweils als 2/2-Wegeventile, vorzugsweise ebenfalls vorgesteuert, ausgebildet sind. Das untere Teilstellventil $8_2'$ dient dann dem Halten bzw. der Entlüftung der Bremsleitung zu den Bremszylindern 6; das obere Teilstellventil $8_1'$ dem Halten und der Druckaufteilng.

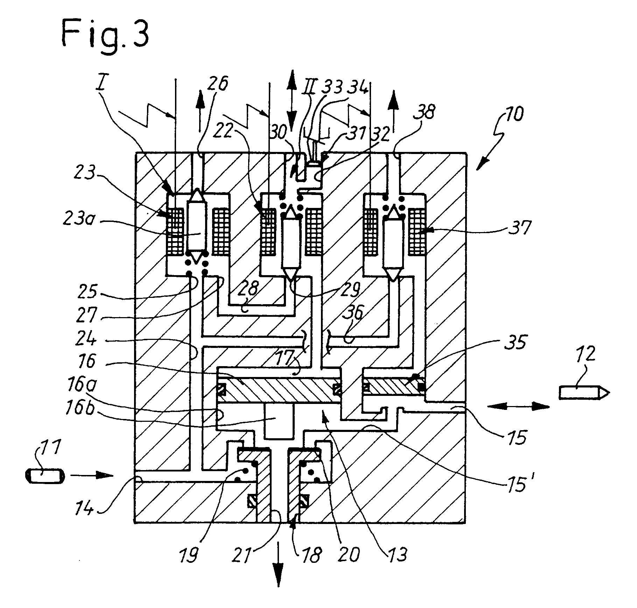

Bei der in Figur 3 gezeigten, zu einem gemeinsamen Block zusammengefassten Ventilkombination ist diese allgemein als Drucksteuerventil 10 bezeichnet und umfasst ein Relaisventil 13 und mindestens ein Steuerventil zur Umschaltung zwischen einem ersten Steuerkreis I (elektrisch) oder einem zweiten Steuerkreis II (pneumatisch).

Das Relaisventil 13 ist zwischen dem Druckmittel-Vorratsbehälter 11 und einem oder mehreren Bremszylindern 12 geschaltet. Für den Anschluss des Vorratsbehälters 11 und des oder der Bremszylinder 12 sind jeweils ein Gehäuseanschluss 14 und 15 vorgesehen. Das Relaisventil 13 verfügt über einen Schaltkolben 16, der als bewegliche Wand in Verbindung mit einer Bohrung 16a im Gehäuse des Drucksteuerventils eine Steuerkammer 17 begrenzt. Der Schaltkolben 16 hat einen kolbenstangenartigen Ansatz 16b, der der Betätigung des Ventilgliedes 18 des Relaisventils 13 dient, wobei dieses in der Ausgangsposition von einer Feder 19 auf seinen Sitz 20 gepresst ist und aufgrund einer mittleren Bohrung 21 gleichzeitig eine Entlastungsstelle für den oder die Bremszylinder bildet.

Bei dem in der Zeichnung dargestellten Ausführungsbeispiel ist entsprechend einer ergänzenden bevorzugten Ausgestaltung der Ausgang 15' des Relaisventils über ein weiteres, einer Vorsteuerung unterworfenes Hauptventil zum Ausgang 15 geführt, zur Einbeziehung von in diesem Fall einkanaligen ABS-Steuerfunktionen, worauf weiter unten noch eingegangen wird.

Ein aktives Steuerventil 22, welches insoweit mit dem Eingangsventil 4, 4' der vorherigen Ausführungsbeispiele vergleichbar ist, überwacht die mehrkreisige Ansteuerung der Steuerkammer 17 des Relaisventils, so dass entweder ein erster Steuerkreis I (elektrisch) oder ein zweiter Steuerkreis II (pneumatisch) der Steuerkammer den zur Verschiebung des Schaltkolbens 16 erforderlichen Steuerdruck zuführt.

Der Steuerkreis I umfasst ein Steuerventil 23, welches als 3/2-Wegeventil ausgebildet ist. Der Anker 23a des Steuerventils 23 ist beidseitig ventilgliedförmig unter Bildung von Verschlussstücken so ausgebildet, dass je nach Ansteuerung durch ein entsprechendes elektrisches Signal (in digitaler Form) ein mit dem Vorratsdruck über einen Gehäusekanal 24 verbundener Ventileinlass 25 oder eine Entlüftungsstelle 25 überwachbar und abdichtbar sind; der Auslass 27 des elektrischen Steuerventils ist über einen Gehäuseverbindungskanal 28 mit dem einen Einlass 29 des Steuerventils 22 verbunden, dessen anderem Einlass 30 der pneumatische Steuerdruck zugeführt ist.

Die Ausbildung der beiden in ihrer Grundform ähnlichen Steuerventile 22 und 23 ist so getroffen, dass im Ruhezustand oder stromlosen Zustand das Steuerventil des elektrischen Steuerkreises I den Entlüftungsauslass 26 und das Steuerventil 22 seinen einen, über 23 mit Vorratsdruck beaufschlagten Einlass 29 absperrt. Daher ist im nicht angesteuerten Zustand bzw. nach jeder Bremsung das 3/2-Wege-Steuerventil 22 auf den pneumatischen Steuerkreis II umgeschaltet. Gleichzeitig ergibt sich aus dieser geschilderten Vorsteuerventil-Sitzkombination, dass der Vorratsdruck über das Steuerventil 23 des elektrischen Steuerkreises I bis zu dem Steuerventil 22 anliegt, und zwar im stromlosen Zustand beider Steuerventile. Daher ist es möglich, im stromlosen Zustand den Zustand aller Ventilsitze (kritische Sitze) auf Dichtheit zu überprüfen, da sich im anderen Fall bei einem mangelhaften Zustand der Ventilsitze und Durchgänge ein merkbares Signal ergibt.

Dieses Fehlersignal würde beim Steuerventil 23 einem Lecken über die Entlüftungsöffnung 26 entsprechen; beim Steuerventil 22 ergibt sich an der Anschlussöffnung 30 für den pneumatischen Steuerdruck ein Leckdruck von der Druckquelle 11 aus.

Schliesslich ist in der Steuerleitung für die Zuführung des pneumatischen Steuerdrucks zum Steuerventil 22 noch ein Druckschalter 31 angeordnet - entsprechend Drucksensor 9 -, der sich bei dem dargstellten Ausführungsbeispiel in einer zur Steuerleitung parallelen und in diese einmündende, nach aussen offenen Bypassleitung 32 befindet. Der Druckschalter umfasst einen, den Druck in der Steuerleitung erfassenden Kolben 33 und einem vom Kolben 33 angetriebenen, bei Druckeinwirkung ansprechenden elektrischen Schalter 34. Mittels dieses Druckschalters ist es daher möglich, zunächst allgemein zu überwachen, ob der pneumatische Steuerdruck bis ins Drucksteuerventil 10 gelangt. Der Druckschalter 31 ist auch geeignet, einen möglicherweise auftretenden Leckfluss des Vorratsdrucks am Verschlusskörper des Ankers des Steuerventils 22 vorbei zu erfassen und durch Betätigung des Schalters 34 in eine elektrische Signalgabe umzusetzen.

Wird in einer weiteren Ausgestaltung vorliegender Erfindung das Drucksteuerventil ein- oder auch beidseitig vom Auslass des Relaisventils gesehen durch weitere unter der Vorsteuerung von Magnetventilen stehende Hauptventile ergänzt, zur Einbeziehung von Haltefunktionen, dann können auch diese Vorsteuerventile auf Dichtheit im stromlosen Zustand überwacht werden. In der Zeichnung ist an den Auslass 15' des Relaisventils lediglich ein weiteres, eine Haltefunktion bei ABS-Ansteuerung realisierendes Hauptventil 35 geschaltet, dem ein über einen Gehäusekanal 36 mit Druck aus der Vorratsquelle 11 beaufschlagtes Steuerventil 37 zugeordnet ist. Auch in diesem Fall ist die Ankerpositionierung mit den Verschlussstücken durch entsprechende Zuordnung der auf den Anker wirkenden Vorspannungsfeder so getroffen, dass im stromlosen zustand der Entlüftungsanschluss 38 offen ist und der Anker den Vorratsdrukeinlass des Steuerventils abdichtet. Ergibt sich hier ein mangelhafter Sitz, dann führt das Anstehen des Vorratsdrucks bis zu diesem Steuerventil 37 ebenfalls zu einem merkbaren Lecksignal bzw., was für das Steuerventil 22 und das Steuerventil 37 zutrifft, zu einer Steuerbewegung der Schaltkolben der nachgeschalten Ventile, was ebenfalls erfasst werden kann.

**Patentansprüche**

1. Mehrkreisig gesteuerte Bremsanlage mit mindestens einem den Bremszylindern vorgeordneten Steuerventil (4', 22), das von einem vom Fahrer willkürlich betätigbaren Betriebsbremswertgeber (1) aus gesteuert wird, welcher sowohl ein elektrisches als auch ein durch Druckmittel hervorgerufenes Bremssignal erzeugt, wobei das druckmittelgesteuerte Bremssignal einem Eingang (4a) des Steuerventils und das elektrische Bremssignal einer elektrischen Steuerschaltung (5') zugeführt wird, die die Magnetteile des Steuerventils (4' 22) und eines Stellventils (8'; 8$_1$', 8$_2$') ansteuert, wobei das Steuerventil (4' 22) an beide, vom Betriebsbremswertgeber mindestens mittelbar angesteuerte Steuerkreise angeschlossen ist, dadurch gekennzeichnet, daß der druckmittelgesteuerte Kreis pneumatisch gesteuert ist, daß für den Eingang (4a) des pneumatisch gesteuerten Kreises des Steuerventils (4', 22) ein druckempfindlicher Sensor (9, 31) vorgesehen ist zur Überprüfung des pneumatischen Signals auf Verfügbarkeit und/oder Funktionsüberwachung und daß bei vorhandener und primär bevorzugter elektrischer Bremssignalgabe der Bremsdruck lediglich über das Stellventil (8'; 8$_1$') direkt vom Vorratsbehälter (11) den Bremszylindern (6) zugeführt ist bei Zurückhaltung des vom Betriebsbremswertgeber (1) stammenden pneumatischen Bremssignals durch das dann gesperrte Steuerventil (4'; 22) und bei Ausfall des elektrisch gesteuerten Kreises der Bremsdruck durch den Betriebsbremswertgeber (1) über das in diesem Fall auf Durchgang geschaltete Steuerventil eingesteuert wird.

2. Bremsanlage nach Anspruch 1, dadurch gekennzeichnet, daß das Steuerventil ein dem Stellventil (8') pneumatisch parallelgeschaltetes Eingangsventil (4') ist.

3. Bremsanlage nach Anspruch 2, dadurch gekennzeichnet, daß das Steuerventil (4') und/oder das Stellventil (8') ein Proportionalventil ist.

4. Bremsanlage nach einem der Ansprüche 1 bis 3, dadurch gekennzeichnet, daß ein erster pneumatisch gesteuerter Teilkreis vom Vorratsbehälter (11; Fig. 1 und 2) über den Betriebsbremswertgeber (1) und das Steuerventil (4') und ein zweiter pneumatisch gesteuerter Teilkreis zu diesem parallel über das Stellventil (8') zu einem Druckleitungs-Knotenpunkt (49) vor dem oder den Bremszylindern (6) gefürt ist.

5. Bremsanlage nach Anspruch 4, dadurch gekennzeichnet, daß Steuerventil (4') und Stellventil (8') gegenläufig gesteuert sind.

6. Bremsanlage nach einem oder mehreren der Ansprüche 1 bis 5, dadurch gekennzeichnet, daß am Ausgang des Stellventils (8') zu den Bremszylindern (6) ein den anliegenden pneumatischen Druck als stetigen Meßwert erfassender zweiter Drucksensor (7') angeordnet ist und daß der von diesem zweiten Drucksensor (7') erstellte Druckistwert nach Vergleich mit dem vom Betriebsbremswertgeber (1) erzeugten elektrischen Bremssignal der Ansteuerung des Stellventils (8') zur Einregelung auf den gewünschten Sollwert dient.

7. Bremsanlage nach einem oder mehreren der Ansprüche 1 bis 6, dadurch gekennzeichnet, daß Steuerventil (4') und/oder Stellventil (8') vorgesteuerte Magnetventile sind.

8. Bremsanlage nach einem oder mehreren der Ansprüche 1 bis 7, dadurch gekennzeichnet, daß bei Paral-

5

lelschaltung von Steuerventil (4') und Stellventil (8') zur Bildung des pneumatisch gesteuerten Bremskreises das Steuerventil ein 2/2-Wege-Magnetventil ist.

9. Bremsanlage nach einem der Ansprüche 1 bis 8, dadurch gekennzeichnet, daß das Stellventil (8') ein elektrisch doppelt angesteuertes, vorgesteuertes 3/3-Wege-Magnetventil ist.

10. Bremsanlage nach einem oder mehreren der Ansprüche 1 bis 8, dadurch gekennzeichnet, daß das den Bremszylindern (6) unmittelbar vorgeschaltete Stellventil aus zwei vorgesteuerten 2/2-Wege-Magnetteilventilen (8$_1$', 8$_2$') gebildet ist.

11. Bremsanlage nach Anspruch 1, dadurch gekennzeichnet, daß ein Relaisventil (13) mit den zugeordneten Steuerventilen (22, 23) in einem gemeinsamen Drucksteuerventil (10) vorgesehen sind, wobei das mehrkresig (elektrisch, pneumatisch) angesteuerte Steuerventil (22) als aktives Vorsteuerventil zur wahlweisen Aufleitung des vom Vorratsbehälter (11) stammenden Drucks oder eines pneumatischen Steuerdrucks zum Relaisventil (13) ausgebildet ist.

12. Bremsanlage nach Anspruch 11, dadurch gekenzeichnet, daß im stromlosen Zustand der Steuerventile (22, 23) der vom Vorratsbehälter (11) anliegende Druck unmittelbar bis zu dem Steuerventil (22) zur Ventilsitzüberwachung anliegt.

13. Bremsanlage nach Anspruch 11 oder 12, dadurch gekenzeichnet, daß das aktive Steuerventil (22) ein 3/2-Wege-Elektromagnetventil ist, mit einem ersten Einlaßanschluß (29), der als Steuerkreis (I) bei elektrischer Ansteuerung mit Druck aus dem Vorratsbehälter (11) beaufschlagt ist, und einem zweiten Einlaßanschluß (30), dem pneumatischer Steuerdruck zur Bildung des zweiten Steuerkreises (II) zugeführt ist.

14. Bremsanlage nach einem der Ansprüche 11 bis 13, dadurch gekennzeichnet, daß die Verschlußstücke der Magnetventile im stromlosen Zustand durch jeweilige Vorspannungsfedern so positioniert sind, daß der Vorratsdruck am abgesperrten Einlaßanschluß des Steuerventils (22) ansteht.

15. Bremsanlage nach einm der Ansprüche 11 bis 14, dadurch gekennzeichnet, daß im stromlosen Zustand der pneumatische Steuerdruck des zweiten Steuerkreises (II) dem Relaisventil (13) zugeführt ist.

16. Bremsanlage nach einem der Ansprüche 11 bis 15, dadurch gekennzeichnet, daß in der pneumatischen Steuerleitung (30) zum Steuerventil (22) ein Druckschalter (31) angeordnet ist zur Überwachung der Steuerdruckzuführung bis zum Drucksteuerventil (10).

17. Bremsanlage nach einem der Ansprüche 11 bis 16, dadurch gekennzeichnet, daß bei Erweiterung der Drucksteuer-Ventilausbildung durch mindestens ein an den Ausgang (15) des Relaisventils (13) angeschaltetes, der Vorsteuerung durch ein Magnetventil unterworfenes Hauptventil (35) zur Einbeziehung von Steuerfunktionen (Druck halten) das zugehörige Steuerventil (37) jeweils so ausgebildet ist, daß im stromlosen Zustand bei am Einlaßanschluß anstehenden Vorratsdruck dieser abgesperrt ist.

## Claims

1. Brake system under multicircuit control, with at least one control valve (4', 22) preceding the brake cylinders and controlled from an operating brake-value transmitter (1) which is randomly actuable by the driver and which generates both an electrical brake signal and a brake signal caused by pressure medium, the brake signal controlled by pressure medium being fed to one inlet (4a) of the control valve and the electrical brake signal to an electrical control circuit (5') which activates the solenoid parts of the control valve (4', 22) and of an adjusting valve (8'; 8$_1$', 8$_2$'), the control valve (4', 22) being connected to the two control circuits activated at least indirectly by the operating brake-value transmitter, characterised in that the circuit controlled by pressure medium is controlled pneumatically, in that a pressure-sensitive sensor (9, 31) is provided for the inlet (4a) of the pneumatically controlled circuit of the control valve (4', 22), for the purpose of checking the pneumatic signal for availability and/or for functional monitoring, and in that, when there is a primarily preferred electrical brake-signal transmission, the brake pressure is fed directly from the supply reservoir (11) to the brake cylinders (6) solely via the adjusting valve (8'; 8$_1$'), with the pneumatic brake signal coming from the operating brake-value transmitter (1) being held back by the then blocked control valve (4'; 22), and in the event of a failure of the electrically controlled circuit the brake pressure is admitted by means of the operating brake-value transmitter (1) via the control valve which is in this case switched to allow flow through.

2. Brake system according to Claim 1, characterised in that the control valve is an inlet valve (4') connected pneumatically in parallel with the adjusting valve (8').

3. Brake system according to Claim 2, characterised in that the control valve (4') and/or the adjusting valve (8') is a proportional valve.

4. Brake system according to one of Claims 1 to 3, characterised in that a first pneumatically controlled part circuit is guided from the supply reservoir (11; Figures 1 and 2) via the operating brake-value transmitter (1) and the control valve (4') and a second pneumatically controlled part circuit is guided parallel to this via the adjusting valve (8′) to a delivery-line junction (49) in front of the brake cylinder or brake cylinders (6).

5. Brake system according to Claim 4, characterised in that the control valve (4′) and adjusting valve (8′) are controlled oppositely to one another.

6. Brake system according to one or more of Claims 1 to 5, characterised in that a second pressure sensor (7′) detecting the occurring pneumatic pressure as a continuous measured value is arranged at the outlet of the adjusting valve (8′) to the brake cylinders (6), and in that the actual pressure value obtained by this second pressure sensor (7′) serves, after comparison with the electrical brake signal generated by the operating brakevalue transmitter (1), for activating the adjusting valve (8′) for regulation to the desired nominal value.

7. Brake system according to one or more of Claims 1 to 6, characterised in that the control valve ( 4′) and/or adjusting valve ( 8′) are pilot-controlled solenoid valves.

8. Brake system according to one or more of Claims 1 to 7, characterised in that, with a parallel connection of the control valve (4′) and adjusting valve (8′) for forming the pneumatically controlled brake circuit, the control valve is a 2/2-way solenoid valve.

9. Brake system according to one of Claims 1 to 8, characterised in that the adjusting valve (8′) is an electrically double-activated pilot-controlled 3/3-way solenoid valve.

10. Brake system according to one or more of Claims 1 to 8, characterised in that the adjusting valve directly preceding the brake cylinders (6) is formed from two pilot-controlled 2/2-way part solenoid valves ($8_1'$, $8_2'$).

11. Brake system according to Claim 1, characterised in that a relay valve (13) with the associated control valves (22, 23) are provided in a common pressure control valve (10), the control valve (22) activated by multiple circuits (electrical, pneumatic) being designed as an active pilot valve for selective transmission of the pressure coming from the supply reservoir (11) or of a pneumatic control pressure to the relay valve (13).

12. Brake system according to Claim 11, characterised in that, in the currentless state of the control valves (22, 23), the pressure obtained from the supply reservoir (11) is applied directly to the control valve (22) for valve-seat monitoring.

13. Brake system according to Claim 11 or 12, characterised in that the active control valve (22) is a 3/2-way solenoid valve, with a first inlet connection (29) which as control circuit (I), is subjected to pressure from the supply reservoir (11) when under electrical activation, and with a second inlet connection (30), to which pneumatic control pressure is fed to form the second control circuit (II).

14. Brake system according to one of Claims 11 to 13, characterised in that the closing pieces of the solenoid valves are so positioned by respective prestressing springs in the currentless state that the supply pressure appears at the shut-off inlet connection of the control valve (22).

15. Brake system according to one of Claims 11 to 14, characterised in that, in the currentless state, the pneumatic control pressure of the second control circuit (II) is fed to the relay valve (13).

16. Brake system according to one of Claims 11 to 15, characterised in that a pressure switch (31) is arranged in the pneumatic control line (30) to the control valve (22) for monitoring the feed of control pressure to the pressure control valve (10).

17. Brake system according to one of Claims 11 to 16, characterised in that, when the design of the pressure control valve is extended by at least one main valve (35) connected to the outlet (15) of the relay valve (13) and subjected to pilot control by a solenoid valve, for the inclusion of control functions (holding pressure), the respective associated control valve (37) is so designed that, in the currentless state with supply pressure applied to the inlet connection, the latter is shut off.

**Revendications**

1. Installation de freinage à plusieurs circuits comportant au moins un distributeur de commande (4′, 22) en amont des cylindres de frein et qui est commandé par un générateur de valeur de freinage (1) manoeuvré à volonté par le conducteur et qui produit aussi bien un signal électrique qu'un signal pneumatique de freinage, le signal de freinage commandé par le fluide sous pression est appliqué à une entrée (4a) du distributeur de commande et le signal électrique de freinage étant appliqué à un circuit électrique de commande (5′) qui commande les parties électromagnétiques du distributeur de commande et d'un distributeur de positionnement (8′, $8_1'$, $8_2'$), le distributeur de commande (4′, 22) étant relié aux deux circuits de freinage commandés, au moins indirectement, par le générateur de valeur de freinage, caractérisée en ce que le circuit de commande de fluide comprimé est commandé pneumatiquement, il est prévu pour l'entrée (4a) du circuit, commandé pneumatiquement, du distributeur de commande (4′, 22), un détecteur sensible à la pression (9, 31) pour vérifier si l'on dispose effectivement du signal pneumatique et/ou pour surveiller le fonctionnement, et en ce que, dans le cas où existe effectivement un signal électrique de freinage, que l'on utilise en priorité, la pression de freinage est simplement amenée en passant par le distributeur de commande (8′, $8_1'$) directement depuis le réservoir (11) jusqu'au cylindre de frein (6), le signal pneumatique de freinage, fourni par le générateur de valeur de freinage (1), étant alors retenu par le distributeur de commande (4', 22) qui est alors verrouillé ; et en ce que, dans le cas d'une défaillance du circuit commandé électriquement, la pression de freinage est envoyée par le générateur de valeur de freinage (1), par l'intermédiaire du distributeur de commande qui, dans ce cas, a commuté sur la position de passage.

2. Installation de freinage selon la revendication 1, caractérisée en ce que le distributeur de commande est un distributeur d'entrée (4') en parallèle pneumatiquement au distributeur de positionnement (8').

3. Installation de freinage selon la revendication 2, caractérisée en ce que le distributeur de commande (4') et/ou le distributeur de positionnement (8') sont à action proportionnelle.

4. Installation de freinage selon l'une des revendications 1 à 3, caractérisée en ce qu'un premier circuit partiel commandé pneumatiquement relie le réservoir (11) (figures 1 et 2), en passant par le générateur de valeur de freinage (1) et le distributeur de commande (4') à un noeud (49) de conduite sous pression, en amont du ou des cylindres de frein (6), un second circuit partiel commandé pneumatiquement et parallèlement au précédent étant également relié à ce noeud en passant par le distributeur de positionnement (8').

5. Installation de freinage selon la revendication 4, caractérisée en ce que le distributeur de commande (4') et le distributeur (8') sont commandée à contre-courant.

6. Installation de freinage selon une ou plusieurs des revendications 1 à 5, caractérisée en ce qu'à la sortie du distributeur (8') conduisant aux cylindres de frein (6), est prévu un second détecteur de pression (7') qui saisit la pression pneumatique comme une valeur de mesure permanente et cette valeur réelle de la pression déterminée par ce second détecteur de pression (7), après comparaison avec le signal électrique de freinage produit par le générateur de valeur de freinage (1), sert à la commande du distributeur (8') pour assurer la régulation sur la valeur prescrite désirée.

7. Installation de freinage selon une ou plusieurs des revendications 1 à 6, caractérisée en ce que le distributeur de commande (4') et/ou le distributeur (8') sont des organes à manoeuvre électromagnétique précommandés.

8. Installation de freinage selon une ou plusieurs des revendications 1 à 7, caractérisée en ce que, dans le cas d'un circuit de freinage commande pneumatiquement, constitué par le montage de série d'un distributeur de commande (4') et d'un distributeur (8) monté en aval, le distributeur de commande est un distributeur à manoeuvre électromagnétique à 2/2 voies.

9. Installation de freinage selon l'une des revendications 1 à 8, caractérisée en ce que le distributeur (8') est un distributeur à manoeuvre électromagnétique 3/3 voies, à double commande électrique, précommandé.

10. Installation de freinage selon une ou plusieurs des revendications 1 à 8, caractérisée en ce que le distributeur immédiatement en amont des cylindres de frein (6) est formé de deux distributeurs à commande électromagnétique à 2/2 voies précommandés ($8_1'$, $8_2'$).

11. Installation de freinage selon la revendication 1, caractérisée en ce qu'une soupape relais (13) avec les distributeurs de commande correspondants (22, 23) sont prévus dans une soupape de commande de la pression commun (10), le distributeur de commande (22) piloté par plusieurs circuits (électriques, pneumatiques) est conçu sous forme de soupape de précommande actif pour distribuer au choix à la soupape relais (13) la pression provenant du réservoir (11) ou bien une pression de commande pneumatique.

12. Installation de freinage selon la revendication 11, caractérisée en ce qu'à l'état hors tension des distributeurs de commande (22, 23), la pression qui règne dans le réservoir (11) vient directement jusqu'au distributeur de commande (22) pour permettre de surveiller le siège de distributeur.

13. Installation de freinage selon la revendication 11 ou 12, caractérisée en ce que le distributeur de commande actif (22) est un distributeur à manoeuvre électromagnétique à 3/2 voies, comportant un premier raccord d'entrée (29) qui, sous forme de circuit de commande (I), dans le cas d'une commande électrique, est sollicité par la pression provenant du réservoir (11) et comportant un second raccord d'entrée (30) auquel est amenée la pression de commande pneumatique pour constituer le second circuit de commande (II).

14. Installation de freinage selon les revendications 11 à 13, caractérisée en ce qu'à l'état hors tension, les éléments d'obturation des électrovannes sont positionnés par les ressorts respectifs de précontrainte, de façon telle que la pression du réservoir arrive au raccord d'entrée verrouillé du distributeur de commande (22).

15. Installation de freinage selon une des revendications 11 à 14, caractérisée en ce qu'à l'état hors tension, la pression de commande pneumatique du second circuit de commande (II) est amenée à la soupape relais (13).

16. Installation de freinage selon une des revendications 11 à 15, caractérisée en ce que, dans la conduite de commande pneumatique (30) arrivant au distributeur de commande (22), est disposé un pressostat (31) pour surveiller l'arrivée de la pression de commande à la soupape de commande de la pression (10).

17. Installation de freinage selon une des revendications 11 à 16, caractérisée en ce que, dans le cas de l'extension de la conception de la soupape de commande de la pression au moyen d'au moins une soupape principale (35) montée à la sortie (15) de la soupape relais (13) et soumis à la précommande d'une électrovanne, pour prendre en compte des fonctions de commande (maintien de la pression), la soupape de commande correspondant (37) est respectivement conçu de façon qu'à l'état hors tension, la pression du réservoir arrivant au raccord d'entrée, cette pression est verrouillée.

# Fig.1

# Fig. 2

# Fig.3